(19) **Europäisches Patentamt**

**European Patent Office**

**Office européen des brevets**

(11) **EP 1 359 123 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(51) Int Cl.[7]: **C01F 7/34**, C01F 7/14, C01F 7/02

(21) Anmeldenummer: **03005989.3**

(22) Anmeldetag: **05.07.2000**

(54) **Verfahren zur Herstellung von Tonerdehydraten durch Fällung von Aluminiumsalzen in Gegenwart von Kristallisationskeimen**

Process for the preparation of hydrated aluminium oxides by precipitation from aluminium salts in presence of crystallization seeds

procédé pour la production d'hydrates d'alumine par précipitation de sels d'aluminium en présence de germes de cristallisation

(84) Benannte Vertragsstaaten:
**AT BE CH CY DE DK ES FI FR GB GR IE IT LI LU MC NL PT SE**

(30) Priorität: **06.07.1999 DE 19930924**

(43) Veröffentlichungstag der Anmeldung:
**05.11.2003 Patentblatt 2003/45**

(62) Dokumentnummer(n) der früheren Anmeldung(en) nach Art. 76 EPÜ:
**00954302.6 / 1 198 416**

(73) Patentinhaber: **SASOL Germany GmbH**
**20537 Hamburg (DE)**

(72) Erfinder:
• **Glöckler, Rainer, Dr.**
**25541 Brunsbüttel (DE)**

• **Meyer, Arnold**
**25693 St. Michaelisdonn (DE)**

(74) Vertreter: **Schupfner, Georg et al**
**Müller Schupfner**
**Patentanwälte**
**Parkstrasse 1**
**21244 Buchholz (DE)**

(56) Entgegenhaltungen:
**EP-A- 0 602 900 EP-A- 0 726 877**
**EP-A- 0 849 223 WO-A-99/03783**
**US-A- 5 800 797**

• **N.G. PAPAYANNAKOS ET AL.: "Effect of seeding during precusrsor preparation on the pore structure of alumina catalyst supports" MICROPOROUS MATERIALS, Bd. 1, 1993, Seiten 413-422, XP000974464 amsterdam (NL)**

# EP 1 359 123 B1

**Beschreibung**

Die Erfindung betrifft ein Verfahren zur Herstellung von Tonerdehydraten durch Fällung von Aluminiumsalzen in Gegenwart von Kristallisationskeimen bestimmter Größe.

Verfahren zur Herstellung von böhmitischen Tonerden bzw. Alpha-Aluminiumoxidmonohydraten durch Neutralisation basischer Aluminatlösungen mit z.B. Schwefelsäure oder sauren Aluminiumsalzlösungen sind bekannt. Hierbei erfolgt die Fällung der Tonerdehydrate in der Regel bei einem pH-Wert zwischen 4,5 und 7. Es finden sich in der Literatur aber auch Verfahren, bei denen die Fällung der Tonerdehydrate bei einem pH von 7 bis 10 durchgeführt wird.

Auch der Einsatz von Kristallisationskeimen bei der Fällung der Tonerden ist bekannt. Nach dem in der DE 21 25 625-C2 beschriebenen Verfahren wird eine Natriumaluminatlösung mit Salpetersäure in einem ersten Kessel versetzt, in einem zweiten Kessel zur Fällung gebracht, wobei aus diesem ein Teilstrom entnommen und in den ersten Kessel geleitet wird. Nach dem in der DE 21 25 625-C2 beschriebenen Verfahren sind Porenvolumina von bis zu 0,33 $cm^3$/g erhältlich

Die US 4,154,812 beschreibt ein Verfahren zur Herstellung von Tonerdehydraten, in dem 5 Phasen durchlaufen werden:

1. Bildung von Kristallisationskeimen aus wäßriger Aluminiumsalzlösung durch Zugabe von Aluminiumsulfat in Wasser und Einstellung eines pH's von 2 bis 5.
2. Fällung der böhmitischen Tonerde durch Einstellung eines pH-Wertes zwischen 7 und 8 durch gleichzeitige Zugabe basischer Aluminat- und saurer Aluminiumsalzlösungen.
3. Einstellung eines pH-Wertes zwischen 9,5 und 10,5 durch Zugabe einer entsprechenden Menge an Aluminatlösung.
4. Nachrühren der Tonerde-Aufschlämmung.
5. Filtration der Aufschlämmung und Waschen des Filterkuchens.

Kennzeichnend für das Verfahren nach der US 4,154,812 ist das Einhalten definierter pH - Werte und Temperaturen (54 bis 82°C) während bestimmter Phasen der Reaktion.

Die nach diesem Verfahren erhältlichen böhmitischen Tonerden zeigen nach einer Aktivierung (400°C für 30 Minuten) ein Porenvolumen (0 - 60 nm) kleiner oder gleich 0,82 ml/g. Als Hauptverunreinigungen weisen diese Produkte 0,02 Gew.% $Na_2O$ und 0,2 Gew.% Sulfat, bezogen auf 72,5 Gew.% $Al_2O_3$, auf. Die US 4,154,812 beschreibt, daß die Porosität der durch Fällung gebildeten böhmitischen Tonerden von dem pH-Wert, der Konzentration und der Temperatur beeinflußt wird. Bei dem sich einstellenden pH-Wert von 2 bis 5, bzw. 3 bis 4, bildet sich durch partielle Hydrolyse des sauren Aluminiumsalzes bei hoher Verdünnung und einer Temperatur von 140 bis 170 °F böhmitische Tonerde in Form von Kristallen. Diese Kristalle wirken als Keime bei der anschließenden Fällung. Auf diese Weise erhält man böhmitische Tonerden, die Porenvolumina von 0,8 bis 0,9 ml/g aufweisen.

Ein Verfahren zur Herstellung von γ-Alumina mit hohen Porenvolumina beschreibt die US 4,248,852. Nach dieser werden Aluminiumsalze und Aluminate so umgesetzt, daß mehrere Reaktionsphasen mit jeweils unterschiedlichen pH -Werten (pH - Swing) durchlaufen werden müssen.

Aufgabe der vorliegenden Erfindung ist es, durch Neutralisation basischer Aluminatlösungen Tonerdehydrate mit Kristallitgrößen von 3 bis 5 nm und mit Porenvolumina von größer 1,0 ml/g, bevorzugt größer 1,25 ml/g, besonders bevorzugt größer 1,6 ml/g, herzustellen. Weiterhin ist es Aufgabe der Erfindung, ein Verfahren zur Verfügung zu stellen, das es erlaubt, Produkte mit gezielt einstellbarer Porenradienverteilung, Porengröße und spezifischer Oberfläche zu erzeugen. Weiterhin sollte das erfindungsgemäße Verfahren einfach durchzuführen sein und nicht die aus dem Stand der Technik bekannte aufwendige Abfolge von unterschiedlichen Verfahrensschritten beinhalten.

Überraschend hat sich gezeigt, daß durch Zusatz anorganischer Teilchen, deren mittlere Partikelgrößen im Nanometer-Bereich liegen, in der Vorlage der Fällung die Präzipitation derart beeinflußt wird, daß die ausgefällten böhmitischen Tonerdehydrate ein Porenvolumen von 1,0 bis 2,5 insbesondere von 1,0 bis 1,6 ml/g und einen mittleren Porenradius von 6 bis 12 nm aufweisen. Dies ist um so bemerkenswerter, als die als Kristallisationskeime eingesetzten anorganischen Teilchen selbst nur ein Porenvolumen im Bereich von 0,5 ml/g aufweisen.

Das erfindungsgemäße Verfahren ist dadurch gekennzeichnet, daß die Fällung aus wäßrigen Lösungen eines sauren Aluminiumsalzes und einer basischen Aluminatlösung in eine wäßrige Vorlage, enthaltend

- Tonerdehydrate und/oder Tonerde, welche in wäßrigen Medien mittlere Teilchendurchmesser von 12 bis 250 nm, bevorzugt 20 bis 150 nm und besonders bevorzugt 20 bis 100 nm aufweisen und ggf. zusätzlich
- in einer Menge von 0,1 bis 5 Gew.% bezogen auf die ausgefällten Tonerdehydrate und berechnet als $Al_2O_3$ organische Polymere bzw. Oligomere, welche in wäßrigen Medien Latices ausbilden, welche Teilchengröße von 12 bis 250 nm und besonders bevorzugt von 20 bis 150 nm oder 50 bis 100 nm aufweisen.

Nach dem erfindungsgemäßen Verfahren sind Tonerdehydrate mit einem sehr hohen Porenvolumen (Bestimmung nach DIN 66134) und einem mittleren Porenradius von 6 bis 12 nm (Bestimmung nach DIN 66134) bei einer Kristallitgröße, ermittelt durch Röntgenbeugung am 120-Reflex, von 3 bis 5 nm zugänglich.

Das Verfahren wird vorzugsweise so durchgeführt, daß

- die Kristallisationskeime in einer wäßrigen sauren Lösung vorgelegt werden und
- eine oder mehrere basische Aluminiumsalze, wie z.B. Alkali- oder Erdalkalialuminate und eine oder mehrere saure Aluminiumsalze (eingeschlossen sind Aluminiumoxysalze), wie z.B. Aluminiumsulfat, Aluminiumnitrat, Aluminiumchlorid, Aluminiumformiat oder Aluminiumoxychlorid oder Aluminiumoxynitrat, vorzugsweise im wesentlichen gemeinsam hinzugefügt werden oder
- die basische Aluminiumverbindung durch Zugabe einer wäßrigen Säure bzw. die saure Aluminiumverbindung durch Zugabe einer wäßrigen Base gefällt wird.

Die Kristallisationskeime aus Tonerdehydraten und/oder Tonerde, welche in wäßrigen Medien mittlere Teilchendurchmesser von 12 bis 250 nm, bevorzugt 20 bis 150 nm und besonders bevorzugt 50 bis 100 nm aufweisen, bestehen in der Regel ihrerseits aus Agglomerate von Kristalliten, die vorzugsweise relativ hohe Kritstallitgrößen von größer 4 nm, vorzugsweise zwischen 4 und 40 nm, aufweisen.

Die Fällung erfolgt vorzugsweise aus wäßrigen Dispersionen von Tonerdepartikeln unter Zusatz von 0,1 bis 5 Gew.% der anorganischer Kristallisationskeimen, bevorzugt 0,5 bis 2 Gew.% und besonders bevorzugt 1 bis 1,5 Gew.%, bezogen auf das insgesamt auszufällende $Al_2O_3$.

Eine Latex im Sinne der Erfindung ist eine kolloidale Dispersion von organischen Polymeren bzw. Oligomeren in einem wäßrigen Medium. Als geeignet zur Ausbildung von Latices haben sich Polymeren bzw. Oligomeren, die als Grundgerüst eine Kohlenstoffkette von mehr als 20, vorzugsweise mehr als 100 Kohlenstoffatome aufweisen und weiterhin bevorzugt aus Monomerenbausteinen enthaltend rnindestens eine Doppelbindung, vorzugsweise eine vinylische oder acrylische Doppelbindung, hergestellt sind. Genannt seien beispielsweise folgende Polymere / Oligomere: Polystyrol, Polyacrylsäure, Polymethacrylsäure und Polyvinylacetat, sowie deren Copolymere und deren Mischungen. Geeignete Zusammensetzungen sind z.B. unter dem Markennamen Dilexo von der Firma Neste Chemicals GmbH erhältlich.

Die Fällung erfolgt in eine wäßrige Vorlage, die aus einer Dispersion anorganischer Teilchen oder anorganischer und organischer Teilchen besteht. Die Fällung erfolgt vorzugsweise bei einer Temperatur von 20 bis 98° C , besonders bevorzugt bei 60 bis 80°C. Der wesentliche Teil der Tonerdehydrate wird bei einem ph-Wert von 5 bis 9, besonders bevorzugt 6 bis 8 gefällt.

Die erfindungsgemäß hergestellten Tonerdehydrate zeigen einen deutlich geringeren Gehalt an anionischen (z.B. Sulfat) und kationischen Verunreinigungen (z.B. Natrium) auf als nach herkömmlichen Verfahren hergestellte.

Als Kristallisationskeime können Gibbsit, Nordstrandit amorphe Tonerden, Bayerit und Diaspor eingesetzt werden, bevorzugt sind böhmitische und/oder pseudoböhmitische Tonerden.

Die erfindungsgemäß einsetzbaren Kristallisationskeime sind z.B. nach dem Verfahren der DE 38 23 895-C1 zugänglich. Nach diesem Verfahren können böhmitische Tonerden mit einem mittleren Porenradius von 3 bis 100 nm durch hydrothermale Alterung einer durch Hydrolyse von Aluminiumalkoxiden erhaltenen Tonerdeaufschlämmung hergestellt werden. Durch die hydrothermale Alterung wachsen die Kristallitgrößen in den jeweiligen Raumrichtungen auf bis zu 40 nm an. Das Porenvolumen dieser böhmitischen Tonerden liegt im Bereich 0,6 bis 0,8 ml/g. Besser geeignet zur Herstellung der erfindungsgemäß einsetzbaren Kristallisationskeime ist jedoch ein Verfahren gemäß der DE 43 37 643-C1. Werden nach diesem Verfahren, hergestellte Kristallisationskeime eingesetzt, werden Fällungsprodukte mit höheren Porenvolumina erreicht. Die Offenbarung der DE 43 37 643-C1 wird hiermit ausdrücklich zum Inhalt dieser Anmeldung gemacht.

Die organischen Verbindungen wirken nicht wie Ausbrennstoffe, die für die Herstellung von Keramiken bekannt sind. Die erfindungsgemäß eingesetzten organischen Verbindungen werden gegenüber diesen Anwendungen in geringen Mengen zugesetzt, während die Ausbrennstoffe überwiegend in Mengen von größer 10 Gew.-% zugesetzt werden. Im Gegensatz zur Vorlage anorganischer Teilchen weisen die Tonerdehydrate nach dieser Ausführungsform einen höheren Gehalt an anionischen Verunreinigungen auf.

Nach diesem Verfahren erhältliche Tonerdehydrate sind vorzugsweise böhmitische oder pseudoböhmitische Tonerden.

Experimentelles:

Die Ermittlung der Kristallitgrößen der erfindungsgemäßen böhmitischen Tonerden erfolgte am 120 Reflex über die allgemeine Scherrer-Formel:

$$\text{Kristallitgröße} = (K \times Lambda \times 57{,}3)/(Beta \times cos\ Theta)$$

K (Formfaktor): 0,992; Lambda (Wellenlänge der Röntgenstrahlung): 0,154 nm; Beta (korrigierte apparative Linienverbreiterung): reflexabhängig ; Theta : reflexabhängig

Die Messungen wurden an einem XRD-Gerät der Firma Philips Typ X'pert durchgeführt. Meßparameter: Start-Winkel [°2θ]: 5.010; End-Winkel [°2θ]: 79.990; Start d-Wert [Å]: 17.62435; End d-Wert [Ä]: 1.19850; Anoden Material: Cu; $\alpha1$ Wellenlänge [Å]: 1.54060; $\alpha2$ Wellenlänge [Å]: 1.54439

Die Ermittlung der Porengrößenverteilung, des Gesamtporenvolumens sowie der spezifischen Oberfläche erfolgte durch Stickstoffadsorption entsprechend DIN 66134 mit einem Gerät der Fa. Quantachrome. Die Ermittlung der Verunreinigungen erfolgte durch Atomemissionsspektroskopie mit induktiv gekoppeltem Plasma (AES-ICP, Fa. SPECTRO).

Beispiel 1 (Vergleichsbeispiel)

31,6 kg Wasser wurden in einem Rührkessel mit 350 l Inhalt, ausgestattet mit Rührsystem, Heizmantel und pH-Meßeinrichtung, auf 70°C aufgeheizt. Es wurde eine Aluminiumsulfatlösung zugesetzt (6,2 % $Al_2O_3$), bis sich ein pH-Wert von 3,5 einstellte. Unter diesen Bedingungen wurde 5 Minuten gerührt (62 U/min). Danach wurde durch gleichzeitige Zugabe der Aluminiumsulfatlösung (21,6 l/h) und einer Natriumaluminatlösung (21,1% $Al_2O_3$, 16,8 1/h) unter Rühren ein pH-Wert von 7,3 eingestellt. Die gefällte böhmitische Tonerde wurde abfiltriert, mit vollentsalztem Wasser gewaschen (50 g Wasser/g Tonerde) und mittels eines Sprühtrockners getrocknet (LuftaustrittstemperatÜr 120°C).

Das gemäß Vergleichsbeispiel erhaltene Produkt zeigt nach einer Aktivierung von 3h bei 550°C die in Tabelle 1 angegebene Porengrößenverteilung, ein Gesamtporenvolumen (0 bis 100 nm) von 0,89 ml/g und eine spezifische Oberfläche von 280 $m^2$/g. Dabei lag der mittlere Porenradius bei 5,8 nm. Die Kristallitgröße, ermittelt am 120-Reflex, betrug 4 nm. Die Ermittlung der Verunreinigungen erfolgte durch Atomemissionsspektroskopie mit induktiv gekoppeltem Plasma (AES-ICP, Fa. SPECTRO). Dabei wurde bei einem $Al_2O_3$-Gehalt von 72,5 % ein Na-Gehalt von 132 ppm und ein Sulfat-Gehalt von 0,12 % erhalten.

Beispiel 2

Zur Herstellung eines Tonerdesoles wurden zu 98,77 kg Wasser 1,23 kg 65 %-ige Salpetersäure und anschließend 1,43 kg PURAL SB-1 (CONDEA) eingerührt. Die mittlere Größe der Tonerdepartikel im Sol beträgt 65 nm.

Zur Fällung der böhmitischen Tonerde wird das Tonerdesol auf 70°C aufgeheizt. Anschließend wurde der pH-Wert durch Zugabe von Natriumaluminatlösung (21,1 % $Al_2O_3$, 16,8 l/h) angehoben und durch gleichzeitige Zugabe von Aluminiumsulfatlösung (6,2 % $Al_2O_3$, 21,6 l/h) auf 7,3 eingestellt. Die gefällte böhmitische Tonerde wurde abfiltriert, mit vollentsalztem Wasser gewaschen (50 g Wasser/g Tonerde) und mittels eines Sprühtrockners getrocknet (Luftaustrittstemperatur 120°C).

Die Ermittlung der Porengrößenverteilung, des Gesamtporenvolumens, der spezifischen Oberfläche und der Verunreinigungen erfolgte nach der unter Experimentelles beschriebenen Methode. Das gemäß Beispiel 2 erhaltene Produkt zeigt nach einer Aktivierung von 3h bei 550°C die in Tabelle 2 angegebene Porengrößenverteilung, ein Gesamtporenvolumen (0 bis 100 nm) von 1,55 ml/g und eine spezifische Oberfläche von 274 $m^2$/g. Dabei lag der mittlere Porenradius bei 12 nm. Die Kristallitgröße, ermittelt am 120-Reflex, betrug 4 nm, der Na-Gehalt 58 ppm und der Sulfat-Gehalt 504 ppm.

Beispiel 3

Zur Herstellung eines Tonerdesoles wurden zu 80 kg Wasser 20 kg Eisessig und anschließend 1,43 kg DISPERAL ® Sol P3 (CONDEA) eingerührt. Die mittlere Größe der Tonerdepartikel im Sol betrug 22 nm.

Zur Fällung der böhmitischen Tonerde wurde das Tonerdesol auf 70°C aufgeheizt. Anschließend wurde der pH-Wert durch Zugabe von Natriumaluminatlösung (21,1% $Al_2O_3$, 16,8 l/h) angehoben und durch gleichzeitige Zugabe von Aluminiumsulfatlösung (6,2% $Al_2O_3$, 21,6 l/h) auf 7,3 eingestellt. Die gefällte böhmitische Tonerde wurde abfiltriert, mit vollentsalztem Wasser gewaschen (50 g Wasser/g Tonerde) und mittels eines Sprühtrockners getrocknet (Luftaustrittstemperatur 120°C).

Die Ermittlung der Porengrößenverteilung, des Gesamtporenvolumens, der spezifischen Oberfläche und der Verunreinigungen erfolgte nach der unter Experimentelles beschriebenen Methode. Das gemäß Beispiel 3 erhaltene Produkt zeigte nach einer Aktivierung von 3h bei 550°C ein Gesamtporenvolumen (0-100 nm) von 1,46 ml/g und eine spezifische Oberfläche von 277 $m^2$/g. Dabei lag der mittlere Porenradius bei 10 nm. Die Kristallitgröße, ermittelt am 120-Reflex, beträgt 4 nm. Der Na-Gehalt beträgt 53 ppm und der Sulfat-Gehalt 539 ppm.

Beispiel 4

Zur Herstellung eines Tonerdesoles werden zu 99 kg Wasser 1,0 kg Ameisensäure und anschließend 1,43 kg CATAPAL A (CONDEA Vista) eingerührt. Die mittlere Größe der Tonerdepartikel im Sol betrug 90 nm.

Zur Fällung der böhmitischen Tonerde wird das Tonerdesol auf 70°C aufgeheizt. Anschließend wurde der pH-Wert durch Zugabe von Natriumaluminatlösung (21,1% $Al_2O_3$; 16,8 l/h) angehoben und durch gleichzeitige Zugabe von Aluminiumsulfatlösung (6,2 % $Al_2O_3$, 21,6 l/h) auf 7,3 eingestellt. Die gefällte böhmitische Tonerde wird abfiltriert, mit vollentsalztem Wasser gewaschen (50 g Wasser/g Tonerde) und mittels eines Sprühtrockners getrocknet (Luftaustrittstemperatur 120°C).

Die Ermittlung der Porengrößenverteilung, des Gesamtporenvolumens, der spezifischen Oberfläche und der Verunreinigungen erfolgte nach der unter Experimentelles beschriebenen Methode. Das nach Beispiel 4 erhaltene Produkt zeigte nach einer Aktivierung von 3h bei 550°C ein Gesamtporenvolumen (0 bis 100 nm) von 1,25 ml/g und eine spezifische Oberfläche von 277 $m^2$/g. Dabei liegt der mittlere Porenradius bei 11 nm. Die Kristallitgröße, ermittelt am 120-Reflex, betrug 4 nm, der Na-Gehalt 126 ppm und der Sulfat-Gehalt 464 ppm.

Beispiel 5

Zur Herstellung eines Tonerdesoles wurden zu 98,77 kg Wasser 1,23 kg 65 %-ige Salpetersäure und anschließend 1,43 kg PURAL 200 (CONDEA) eingerührt. Die mittlere Größe der Tonerdepartikel im Sol beträgt 240 nm.

Zur Fällung der böhmitischen Tonerde wird das Tonerdesol auf 70°C aufgeheizt. Anschließend wird der pH-Wert durch Zugabe von Natriumaluminatlösung (21,1 % $Al_2O_3$, 16,8 l/h) angehoben und durch gleichzeitige Zugabe von Aluminiumsulfatlösung (6,2 % $Al_2O_3$, 21,6 l/h) auf 7,3 eingestellt. Die gefällte böhmitische Tonerde wird abfiltriert, mit vollentsalztem Wasser gewaschen (50 g Wasser/g Tonerde) und mittels eines Sprühtrockners getrocknet (Luftaustrittstemperatur 120°C).

Die Ermittlung der Porengrößenverteilung, des Gesamtporenvolumens, der spezifischen Oberfläche und der Verunreinigungen erfolgte nach der unter Experimentelles beschriebenen Methode. Das gemäß Beispiel 5 erhaltene Produkt zeigt nach einer Aktivierung von 3h bei 550°C ein Gesamtporenvolumen (0-100 nm) von 0,98 ml/g und eine spezifische Oberfläche von 279 $m^2$/g. Dabei lag der mittlere Porenradius bei 7 nm. Die Kristallitgröße, ermittelt am 120-Reflex, betrug 4 nm, der Na-Gehalt 42 ppm und der Sulfat-Gehalt 0,1 %.

Die Poreneigenschaften der gemäß den Beispielen 2 bis 5 erhaltenen Tonerde, in Abhängigkeit von der mittleren Partikelgröße im vorgelegten Sol sind in Tabelle 1 zusammengefaßt:

Tabelle 1

| Mittl. Partikelgröße | Porenvolumen | Mittl. Porenradius im Sol(0-100 nm) |
|---|---|---|
| 22 nm | 1,46 ml/g | 10 nm |
| 65 nm | 1,55 ml/g | 12 nm |
| 90 nm | 1,25 ml/g | 11 nm |
| 240 nm | 0,98 ml/g | 7 nm |

Man erkennt, daß im Bereich eines Soles mit einer Partikelgröße von 65 nm in der wäßrigen Vorlage ein maximales Porenvolumen und ein maximaler mittlerer Porenradius erreicht werden kann.

Beispiel 6 (nicht gemäß beanspruchter Erfindung)

2,2 kg einer aus Acrylsäure und Methacrylsäure bestehenden Polymerdispersion (DILEXO MM 16, NESTE Chemicals GmbH, Düsseldorf) wurden in 90 kg Wasser eingerührt. Die mittlere Partikelgröße in der Dispersion betrug 39 nm.

Zur Vorbereitung der Fällung wurde die Polymerdispersion durch tropfenweise Zugabe von Aluminiumsulfat-Lösung auf pH 3,5 eingestellt und auf 70°C aufgeheizt. Zur Fällung der böhmitischen Tonerde wurde der pH-Wert durch Zugabe von Natriumaluminatlösung (21,1% $Al_2O_3$, 16,8 l/h) angehoben und durch gleichzeitige Zugabe von Aluminiumsulfatlösung (6,2 % $Al_2O_3$, 21,6 l/h) auf 7,3 eingestellt. Die gefällte böhmitische Tonerde wurde abfiltriert, mit vollentsalztem Wasser gewaschen (50 g Wasser/g Tonerde) und mittels eines Sprühtrockners getrocknet (Luftaustrittstemperatur 120°C).

Die Ermittlung der Porengrößenverteilung, des Gesamtporenvolumens, der spezifischen Oberfläche und der Verunreinigungen erfolgte nach der unter Experimentelles beschriebenen Methode. Das gemäß Beispiel 6 erhaltene Produkt zeigte nach einer Aktivierung von 3h bei 550°C ein Gesamtporenvolumen (0-100 nm) von 1,20 ml/g und eine spezifische Oberfläche von 325 m$^2$/g. Dabei liegt der mittlere Porenradius bei 7 nm. Die Kristallitgröße, ermittelt am 120-Reflex, betrug 4 nm, der Na-Gehalt 94 ppm und der Sulfat-Gehalt 1,0 %.

Beispiel 7 (nicht gemäß beanspruchter Erfindung)

2,2 kg einer aus Acrylsäure und Methacrylsäure bestehenden Polymerdispersion (DILEXO MM 16, NESTE Chemicals GmbH, Düsseldorf) werden in 90 kg Wasser eingerührt. Die mittlere Partikelgröße in der Dispersion betrug 51 nm.

Zur Vorbereitung der Fällung wurde die Polymerdispersion durch tropfenweise Zugabe von Natriumaluminat-Lösung auf pH 11,5 eingestellt und auf 70°C aufgeheizt. Zur Fällung der böhmitischen Tonerde wurde der pH-Wert durch Zugabe von Aluminiumsulfatlösung (6,2 % Al$_2$O$_3$, 21,6 l/h) abgesenkt und durch gleichzeitige Zugabe von Natriumaluminatlösung (21,1 % Al$_2$O$_3$, 16,8 l/h) auf 7,3 eingestellt. Die gefällte böhmitische Tonerde wurde abfiltriert, mit vollentsalztem Wasser gewaschen (50 g Wasser/g Tonerde) und mittels eines Sprühtrockners getrocknet (Luftaustrittstemperatur 120°C)

Die Ermittlung der Porengrößenverteilung, des Gesamtporenvolumens, der spezifischen Oberfläche und der Verunreinigungen erfolgte nach der unter Experimentelles beschriebenen Methode.

Das gemäß Beispiel 7 erhaltene Produkt zeigte nach einer Aktivierung von 3h bei 550°C ein Gesamtporenvolumen (0 bis 100 nm) von 1,20 ml/g und eine spezifische Oberfläche von 299 m$^2$/g. Dabei lag der mittlere Porenradius bei 7 nm. Die Kristallitgröße, ermittelt am 120-Reflex, betrug 3 nm, der Na-Gehalt betrug 72 ppm und der Sulfat-Gehalt 1,0 %.

Die in den Beispielen 1 bis 7 hergestellten Tonerdehydrate weisen die in der Tabelle 2 ausgewiesenen Porenradienverteilung, Porenvolumen und Porenoberfläche auf.

## Tabelle 2

| Beispiel 1 | | Beispiel 2 | | Beispiel 3 | |
|---|---|---|---|---|---|
| Radius Å | Poren-Vol. [cc/g] | Radius Å | Poren-Vol. [cc/g] | Radius Å | Poren-Vol. [cc/g] |
| 11,53 | 0,00E+00 | 11,48 | 0,00E+00 | 11,6 | 0,00E+00 |
| 13,32 | 0,00E+00 | 13,25 | 0,00E+00 | 13,26 | 0,00E+00 |
| 14,09 | 0,00E+00 | 14,08 | 0,00E+00 | 14,02 | 0,00E+00 |
| 14,9 | 0,00E+00 | 14,77 | 0,00E+00 | 14,83 | 0,00E+00 |
| 15,72 | 0,00E+00 | 15,62 | 0,00E+00 | 15,68 | 0,00E+00 |
| 16,48 | 0,00E+00 | 16,52 | 0,00E+00 | 16,59 | 0,00E+00 |
| 17,45 | 0,00E+00 | 17,48 | 0,00E+00 | 17,55 | 0,00E+00 |
| 18,43 | 0,00E+00 | 18,46 | 0,00E+00 | 18,55 | 0,00E+00 |
| 19,45 | 0,00E+00 | 19,46 | 0,00E+00 | 19,52 | 0,00E+00 |
| 20,78 | 1,34E-03 | 20,74 | 0,00E+00 | 20,77 | 0,00E+00 |
| 22,22 | 4,86E-03 | 22,14 | 0,00E+00 | 22,09 | 0,00E+00 |
| 23,65 | 1,12E-02 | 23,68 | 0,00E+00 | 23,43 | 0,00E+00 |
| 25,2 | 2,43E-02 | 25,35 | 2,64E-04 | 25,16 | 0,00E+00 |
| 27,11 | 5,96E-02 | 27,03 | 1,71E-03 | 27,15 | 0,00E+00 |
| 29,3 | 1,30E-01 | 29,06 | 6,25E-03 | 29,27 | 3,95E-03 |
| 31,67 | 2,59E-01 | 31,45 | 1,18E-02 | 31,49 | 1,63E-02 |
| 34,34 | 4,18E-01 | 34,21 | 3,19E-02 | 34,07 | 5,28E-02 |
| 36,46 | 4,79E-01 | 36,3 | 3,97E-02 | 36,27 | 8,50E-02 |
| 37,78 | 5,25E-01 | 37,43 | 5,34E-02 | 37,66 | 1,17E-01 |
| 38,9 | 5,70E-01 | 38,94 | 7,13E-02 | 38,98 | 1,63E-01 |
| 40,32 | 6,11E-01 | 40,51 | 9,29E-02 | 40,55 | 2,27E-01 |
| 42,08 | 6,44E-01 | 42,04 | 1,21E-01 | 42,3 | 3,06E-01 |
| 43,85 | 6,69E-01 | 43,91 | 1,62E-01 | 43,92 | 3,62E-01 |
| 45,83 | 6,94E-01 | 45,89 | 2,02E-01 | 45,74 | 4,15E-01 |
| 47,8 | 7,09E-01 | 47,93 | 2,45E-01 | 47,95 | 4,87E-01 |
| 49,89 | 7,29E-01 | 50,24 | 3,06E-01 | 50,15 | 5,43E-01 |
| 52,56 | 7,52E-01 | 52,73 | 3,64E-01 | 52,48 | 6,07E-01 |
| 54,97 | 7,60E-01 | 55,27 | 4,19E-01 | 55,15 | 6,61E-01 |
| 57,35 | 7,76E-01 | 58,24 | 4,88E-01 | 58,31 | 7,25E-01 |
| 60,87 | 7,89E-01 | 61,61 | 5,42E-01 | 61,46 | 7,81E-01 |
| 64,24 | 7,97E-01 | 65,19 | 5,97E-01 | 65,02 | 8,42E-01 |
| 68,48 | 8,10E-01 | 69,45 | 6,70E-01 | 69,05 | 8,84E-01 |
| 73,65 | 8,17E-01 | 74,02 | 7,20E-01 | 73,86 | 9,35E-01 |
| 78,69 | 8,24E-01 | 79,49 | 7,77E-01 | 79,4 | 9,78E-01 |
| 84,41 | 8,30E-01 | 85,94 | 8,40E-01 | 85,09 | 1,02E+00 |
| 90,71 | 8,36E-01 | 92,9 | 8,95E-01 | 92,49 | 1,08E+00 |
| 98,16 | 8,42E-01 | 101,74 | 9,58E-01 | 101,15 | 1,12E+00 |
| 108,02 | 8,47E-01 | 112,74 | 1,02E+00 | 112,23 | 1,17E+00 |
| 120,49 | 8,52E-01 | 126,63 | 1,08E+00 | 125,42 | 1,20E+00 |
| 135,88 | 8,57E-01 | 143,35 | 1,14E+00 | 142,44 | 1,23E+00 |
| 155,57 | 8,62E-01 | 164,42 | 1,20E+00 | 163,89 | 1,26E+00 |
| 182,4 | 8,67E-01 | 195,37 | 1,26E+00 | 190,43 | 1,30E+00 |
| 223 | 8,72E-01 | 241,94 | 1,32E+00 | 231,5 | 1,33E+00 |
| 294,58 | 8,77E-01 | 323,12 | 1,39E+00 | 297,27 | 1,37E+00 |
| 420,95 | 8,83E-01 | 454,54 | 1,44E+00 | 432,76 | 1,42E+00 |
| 651,25 | 8,88E-01 | 809,41 | 1,52E+00 | 701,87 | 1,46E+00 |
| 1173,16 | 8,92E-01 | 1429,05 | 1,55E+00 | 1007,59 | 1,46E+00 |

## Tabelle 2 (Fortsetzung)

| Beispiel 4 | | Beispiel 5 | |
|---|---|---|---|
| Radius Å | Poren-Vol. [cc/g] | Radius Å | Poren-Vol. [cc/g] |
| 11,42 | 0,00E+00 | 11,53 | 0,00E+00 |
| 13,1 | 2,03E-04 | 13,21 | 0,00E+00 |
| 13,84 | 4,84E-04 | 13,96 | 0,00E+00 |
| 14,62 | 8,55E-04 | 14,76 | 0,00E+00 |
| 15,45 | 8,55E-04 | 15,61 | 0,00E+00 |
| 16,34 | 1,43E-03 | 16,53 | 0,00E+00 |
| 17,29 | 1,99E-03 | 17,5 | 0,00E+00 |
| 18,31 | 2,76E-03 | 18,54 | 0,00E+00 |
| 19,42 | 3,66E-03 | 19,62 | 0,00E+00 |
| 20,62 | 4,66E-03 | 20,67 | 0,00E+00 |
| 21,95 | 5,28E-03 | 22,07 | 8,42E-04 |
| 23,43 | 7,13E-03 | 23,6 | 2,46E-03 |
| 25,05 | 9,32E-03 | 25,06 | 7,19E-03 |
| 26,81 | 1,20E-02 | 26,81 | 1,43E-02 |
| 28,6 | 1,44E-02 | 29,04 | 3,27E-02 |
| 31,07 | 2,13E-02 | 31,52 | 6,26E-02 |
| 33,73 | 2,74E-02 | 34,19 | 1,30E-01 |
| 35,5 | 3,11E-02 | 36,38 | 1,72E-01 |
| 36,86 | 3,62E-02 | 37,74 | 2,19E-01 |
| 38,27 | 4,16E-02 | 39,01 | 2,76E-01 |
| 39,8 | 4,70E-02 | 40,42 | 3,50E-01 |
| 41,38 | 5,40E-02 | 42,18 | 4,31E-01 |
| 42,86 | 6,07E-02 | 43,99 | 5,02E-01 |
| 45,02 | 7,54E-02 | 45,86 | 5,77E-01 |
| 47,43 | 8,54E-02 | 47,73 | 6,20E-01 |
| 49,24 | 9,49E-02 | 49,82 | 6,82E-01 |
| 51,54 | 1,15E-01 | 52,22 | 7,22E-01 |
| 54,56 | 1,35E-01 | 54,67 | 7,53E-01 |
| 57,72 | 1,60E-01 | 57,77 | 7,84E-01 |
| 60,69 | 1,83E-01 | 60,98 | 8,03E-01 |
| 64,47 | 2,22E-01 | 64,49 | 8,22E-01 |
| 68,87 | 2,59E-01 | 67,94 | 8,32E-01 |
| 73,48 | 3,17E-01 | 72,52 | 8,48E-01 |
| 78,91 | 3,69E-01 | 78,39 | 8,57E-01 |
| 85,69 | 4,43E-01 | 84,04 | 8,66E-01 |
| 93,44 | 5,16E-01 | 90,57 | 8,74E-01 |
| 102,31 | 6,05E-01 | 98,5 | 8,81E-01 |
| 112,48 | 6,82E-01 | 108,29 | 8,88E-01 |
| 125,17 | 7,70E-01 | 120,35 | 8,96E-01 |
| 141,76 | 8,55E-01 | 135,46 | 9,03E-01 |
| 161,22 | 9,36E-01 | 154,42 | 9,09E-01 |
| 190,61 | 1,03E+00 | 177,26 | 9,16E-01 |
| 232,53 | 1,09E+00 | 226,1 | 9,28E-01 |
| 294,97 | 1,15E+00 | 301,37 | 9,36E-01 |
| 440,19 | 1,20E+00 | 453,46 | 9,51E-01 |
| 767,58 | 1,23E+00 | 857,48 | 9,68E-01 |
| 1530,56 | 1,25E+00 | 1497,5 | 9,76E-01 |

## Tabelle 2 (Fortsetzung)

| Beispiel 6 | | Beispiel 7 | |
|---|---|---|---|
| Radius Å | Poren-Vol.l [cc/g] | Radius Å | Poren-Vol. [cc/g] |
| 11,64 | 0,00E+00 | 11,51 | 0,00E+00 |
| 13,34 | 0,00E+00 | 13,23 | 0,00E+00 |
| 14,11 | 0,00E+00 | 13,89 | 0,00E+00 |
| 14,95 | 0,00E+00 | 14,72 | 0,00E+00 |
| 15,81 | 0,00E+00 | 15,65 | 0,00E+00 |
| 16,7 | 0,00E+00 | 16,41 | 0,00E+00 |
| 17,6 | 0,00E+00 | 17,26 | 0,00E+00 |
| 18,61 | 0,00E+00 | 18,45 | 0,00E+00 |
| 19,71 | 5,42E-04 | 19,57 | 0,00E+00 |
| 20,96 | 2,71E-03 | 20,67 | 7,98E-05 |
| 22,33 | 8,35E-03 | 22,05 | 1,66E-03 |
| 23,72 | 1,95E-02 | 23,48 | 4,57E-03 |
| 25,38 | 4,11E-02 | 25,13 | 1,34E-02 |
| 27,22 | 7,72E-02 | 27,09 | 2,72E-02 |
| 29,29 | 1,37E-01 | 29,12 | 4,50E-02 |
| 31,68 | 2,49E-01 | 31,53 | 7,46E-02 |
| 34,38 | 4,03E-01 | 34,18 | 1,18E-01 |
| 36,44 | 4,65E-01 | 36,1 | 1,47E-01 |
| 37,77 | 5,25E-01 | 37,59 | 1,90E-01 |
| 39,13 | 5,73E-01 | 39,18 | 2,48E-01 |
| 40,59 | 6,18E-01 | 40,51 | 2,95E-01 |
| 42,22 | 6,52E-01 | 42,1 | 3,82E-01 |
| 43,92 | 6,85E-01 | 44,09 | 4,59E-01 |
| 45,83 | 7,13E-01 | 45,93 | 5,49E-01 |
| 47,88 | 7,37E-01 | 47,92 | 6,28E-01 |
| 50,2 | 7,61E-01 | 50,08 | 6,98E-01 |
| 52,61 | 7,82E-01 | 52,46 | 7,58E-01 |
| 55,02 | 8,02E-01 | 55,2 | 8,13E-01 |
| 57,99 | 8,25E-01 | 58,04 | 8,60E-01 |
| 61,48 | 8,45E-01 | 61 | 8,91E-01 |
| 64,97 | 8,65E-01 | 64,59 | 9,22E-01 |
| 69,06 | 8,91E-01 | 69,06 | 9,46E-01 |
| 74,04 | 9,18E-01 | 73,47 | 9,64E-01 |
| 79,61 | 9,49E-01 | 78,2 | 9,80E-01 |
| 85,86 | 9,79E-01 | 84,07 | 9,96E-01 |
| 93,22 | 1,02E+00 | 92,31 | 1,02E+00 |
| 102,36 | 1,05E+00 | 102,41 | 1,03E+00 |
| 113,32 | 1,07E+00 | 111,74 | 1,04E+00 |
| 125,91 | 1,09E+00 | 123,75 | 1,06E+00 |
| 141,67 | 1,11E+00 | 137,64 | 1,06E+00 |
| 164,7 | 1,12E+00 | 161,76 | 1,08E+00 |
| 193,16 | 1,14E+00 | 190,92 | 1,09E+00 |
| 238,94 | 1,15E+00 | 230,14 | 1,10E+00 |
| 307,19 | 1,17E+00 | 299,79 | 1,11E+00 |
| 447,68 | 1,18E+00 | 453,25 | 1,13E+00 |
| 698,1 | 1,19E+00 | 737,46 | 1,16E+00 |
| 1007,91 | 1,19E+00 | 1367,11 | 1,18E+00 |

**EP 1 359 123 B1**

**Patentansprüche**

1. Verfahren zur Herstellung von Tonerdehydraten durch Fällung von basischen und/oder sauren Aluminiumsalzen, **dadurch gekennzeichnet, daß** die Fällung aus einem wäßrigen Medium erfolgt, welches als Kristallisationskeime (a) enthält:

   (a) Tonerdehydrate und/oder Tonerden, wobei die Kristallisationskeime (a) in dem Medium einen mittleren Durchmesser von 12 bis 250 nm aufweisen.

2. Verfahren gemäß Anspruch 1, **dadurch gekennzeichnet, daß** die Kristallisationskeime einen mittleren Durchmesser von 20 bis 150 nm, vorzugsweise 50 bis 100 nm, aufweisen.

3. Verfahren gemäß einem der vorhergehenden Ansprüche, **dadurch gekennzeichnet, daß** zur Fällung Kristallisationskeime in einer Menge von 0,1 bis 5 Gew.%, vorzugsweise 0,5 bis 2 Gew.%, bezogen auf die ausgefällten Tonerdehydrate und berechnet als $Al_2O_3$, eingesetzt werden.

4. Verfahren gemäß einem der vorhergehenden Ansprüche, **dadurch gekennzeichnet, daß**

   - die Kristallisationskeime in einer wäßrigen sauren Lösung vorgelegt werden und
   - eine oder mehrere basische Aluminiumsalze und eine oder mehrere saure Aluminiumsalze gemeinsam hinzugefügt werden.

5. Verfahren gemäß einem der vorhergehenden Ansprüche **dadurch gekennzeichnet, daß** als basische Aluminiumsalze Alkali-, Erdalkalialuminate oder Aluminiumhydroxysalze eingesetzt werden.

6. Verfahren gemäß einem der vorhergehenden Ansprüche, **dadurch gekennzeichnet, daß** als saure Aluminiumsalze Aluminiumsulfat, Aluminiumnitrat, Aluminiumchlorid oder Aluminiumformiat eingesetzt werden.

7. Verfahren gemäß einem der vorhergehenden Ansprüche, **dadurch gekennzeichnet, dass** der wesentliche Teil der Tonerdehydrate bei einem ph-Wert von 5 bis 9, besonders bevorzugt 6 bis 8, gefällt wird.


**Claims**

1. A process for manufacturing alumina hydrates by precipitating basic and/or acidic aluminum salts, **characterized in that** precipitation takes place from an aqueous medium containing as crystal nuclei:

   (a) alumina hydrate and/or alumina, wherein the crystal nuclei (a) in the medium exhibit an average diameter of 12 to 250 nm.

2. The process according to claim 1, **characterized in that** the crystal nuclei exhibit an average diameter of 20 to 150 nm, preferably 50 to 100 nm.

3. The process according to one of the preceding claims, **characterized in that** crystal nuclei in an amount of 0,1 to 5 %w/w, preferably 0,5 to 2%w/w, relative to the precipitated alumina hydrates and computed as $Al_2O_3$ are used for precipitation.

4. The process according to one of the preceding claims, **characterized in that**

   - the crystal nuclei are put in an aqueous, acidic solution and
   - one or more basic aluminum salts and one or more acidic aluminum salts are jointly added.

5. The process according to one of the preceding claims, **characterized in that** alkali aluminates, earth alkali aluminates or aluminum hydroxy salts are used as the basic aluminum salts.

6. The process according to one of the preceding claims, **characterized in that** aluminum sulfate, aluminum nitrate, aluminum chloride or aluminum formiate are used as the acidic aluminum salts.

**10**

7. The process according to one of the preceding claims, **characterized in that** the essential part of the alumina hydrate is precipitated at a pH-value of 5 to 9, particularly preferred 6 to 8.

**Revendications**

1. Procédé de préparation d'hydrates d'alumine par précipitation de sels d'aluminium basiques et/ou acides, **caractérisé en ce que** la précipitation est réalisée à partir d'un milieu aqueux qui contient comme germes de cristallisation (a) :

   (a) des hydrates d'alumine et/ou des alumines, les germes de cristallisation (a) présentant dans le milieu un diamètre moyen de 12 à 250 nm.

2. Procédé selon la revendication 1, **caractérisé en ce que** les germes de cristallisation présentent un diamètre moyen de 20 à 150 nm, de préférence de 50 à 100 nm.

3. Procédé selon l'une quelconque des revendications précédentes, **caractérisé en ce que** l'on utilise pour la précipitation des germes de cristallisation en une quantité de 0,1 à 5% en poids, de préférence de -0,5 à 2% en poids, par rapport aux hydrates d'alumine précipités et calculée comme $Al_2O_3$.

4. Procédé selon l'une quelconque des revendications précédentes, **caractérisé en ce que**

   - les germes de cristallisation sont placés dans une solution acide aqueuse et
   - un ou plusieurs sel(s) d'aluminium basique(s) et un ou plusieurs sel(s) d'aluminium acide(s) sont ajoutés ensemble.

5. Procédé selon l'une quelconque des revendications précédentes, **caractérisé en ce que** l'on utilise comme sels d'aluminium basiques des aluminates alcalins, des aluminates alcalino-terreux ou des sels d'hydroxyde d'aluminium.

6. Procédé selon l'une quelconque des revendications précédentes, **caractérisé en ce que** l'on utilise comme sels d'aluminium acides du sulfate d'aluminium, du nitrate d'aluminium, du chlorure d'aluminium ou du formiate d'aluminium.

7. Procédé selon l'une quelconque des revendications précédentes, **caractérisé en ce que** la partie principale des hydrates d'alumine est précipitée à un pH de 5 à 9, de façon particulièrement préférée de 6 à 8.